# EUROPÄISCHE PATENTSCHRIFT

(11) **EP 0 541 650 B1**
(45) Veröffentlichungstag und Bekanntmachung des Hinweises auf die Patenterteilung: **02.03.1994**
(21) Anmeldenummer: 91914089.7
(22) Anmeldetag: 31.07.1991
(51) Int. Cl.: G01F 1/84

(54) **MASSENDURCHFLUSSMESSGERÄT**
MASS FLOW METER
DEBITMETRE MASSIQUE

(30) Priorität: 31.07.1990 DE 4024253
(43) Veröffentlichungstag der Anmeldung: 19.05.1993
(73) Patentinhaber: Gusko, Achim, D-70794 Filderstadt (DE)
(72) Erfinder: GUSKO, Achim, D-7302 Nellingen (DE); NEUKAMM, Bernd-Michael, D-7401 Pliezhausen (DE); BELAND, Michael, D-2844 Lemförde-Stemshorn (DE)
(74) Vertreter: Wolf, Eckhard, Dr.-Ing.
(86) Internationale Anmeldenummer: EP9101440
(87) Internationale Veröffentlichungsnummer: WO9202786

(56) Entgegenhaltungen:
- DE-A- 3 230 445
- US-A- 2 831 349
- US-A- 2 834 209
- US-A- 2 923 154

## Beschreibung

Die Erfindung betrifft ein Massendurchflußmeßgerät für strömende Medien, das nach dem Coriolis-Prinzip arbeitet, mit einem Leitungseinlauf, mit einer das strömende Medium führenden Leitung, mit einem Leitungsauslauf, mit einem die Leitung in eine Rotationsbewegung versetzenden Leitungsantrieb und mit einer Corioliskräfte erfassenden Meßeinrichtung.

Massendurchflußmeßgeräte für strömende Medien, die nach dem Coriolis-Prinzip arbeiten, sind in verschiedenen Ausführungen bekannt (vgl. z.B. die DE-OSen 1 473 164, 1 498 464, 2 404 356, 2 629 833, 2 822 087, 2 833 037, 2 938 498, 3 007 361, 3 329 544, 3 443 234, 3 503 841, 3 505 166, 3 526 297, 3 707 777, 3 916 285 und 4 016 907, die EP-OSen 0 083 144, 0 109 218, 0 119 638, 0 185 709, 0 196 150, 0 210 308, 0 212 782, 0 235 274, 0 239 679, 0 243 468, 0 244 692, 0 250 706, 0 271 605, 0 275 367 und 0 282 552 sowie die US-PSen 4,491,009, 4,628,744 und 4,666,421) und finden in zunehmendem Maße in der Praxis Verwendung. US-A-2923154 offenbart ein solches Gerät, das die Merkmale des Oberbegriffs des Anspruchs 1 aufweist.

Anfänglich sind nach dem Coriolis-Prinzip arbeitende Massendurchflußmeßgeräte bekannt geworden, bei denen die - gekrümmte - Leitung in eine dauernde Rotationsbewegung versetzt wird. Aus vielen Gründen haben solche Massendurchflußmeßgeräte in die Praxis keinen, zumindest keinen nennenswerten Eingang gefunden. In die Praxis Eingang gefunden, seit mehr als einem Jahrzehnt, haben dagegen nach dem Coriolis-Prinzip arbeitende Massendurchflußmeßgeräte, bei denen die Leitung nicht in eine dauernde Rotationsbewegung, sondern in eine Schwingungsbewegung versetzt wird. Bei diesem Massendurchflußmeßgeräten muß also die Leitung elastisch verformbar sein, nämlich Biegeschwingungen ausführen können. Damit die mit Biegeschwingungen ausführenden Leitungen versehenen Massendurchflußmeßgeräte relativ kompakt sein können, haben sie eine relativ hohe Eigenfrequenz (Eigenfrequenz = Arbeitsfrequenz). Das führt z.B. dazu, daß sich Zwei-Phasen-Medien nicht genau messen lassen. Zwar läßt sich sich mit geringeren Wandstärken die Eigenfrequenz reduzieren, doch steigt damit die Materialbeanspruchung an. Wird die Schwingungsamplitude reduziert, dann steigt die Empfindlichkeit des so ausgeführten Massendurchflußmeßgerätes gegenüber äußeren Störungen.

Bei Massendurchflußmeßgerätenm, die mit in Biegeschwingungen (oder in Biege- und Torsionsschwingungen) versetzten Leitungen arbeiten, muß das Material der Leitung dämpfungsarm sein; geringe vorhandene Dämpfungen dürfen sich z.B. nicht mit der Temperatur ändern. Außerdem muß sich bei solchen Massendurchflußmeßgeräten das Material der Leitungen nennenswert elastisch verformen lassen, wobei es den elastischen Verformungen ermüdungsfrei standhalten muß.

Der systembedingten Nachteile von Massendurchflußmeßgeräten mit schwingenden Leitungen wegen ist ein in der Praxis verwendbares Massendurchflußmeßgerät erwünscht das nicht mit einer schwingenden Leitung, sondern mit einer sich dauernd drehenden Leitung arbeitet. Ein solches Massendurchflußmeßgerät anzugeben, das besonders einfach aufgebaut ist, ist folglich die der Erfindung zugrundeliegende Aufgabe.

Das erfindungsgemäße Massendurchflußmeßgerät, mit dem und bei dem die zuvor hergeleitete und dargelegte Aufgabe gelöst ist, ist im Anspruch 1 definiert. Bei dem erfindungsgemäßen Massendurchflußmeßgerät ist der die Leitung führende Rotor mehr oder weniger frei beweglich im als Stator ausgeführten Gehäuse, so daß der Rotor und damit die - gekrümmte Leitung - eine kontinuierliche Rotationsbewegung ausüben kann. Dabei werden auf dem mit der gekrümmten Leitung versehenen Rotor dann, wenn die Leitung von einem Medium durchströmt wird, Corioliskräfte ausgeübt. Gekrümmte Leitung meint im übrigen dabei, daß sich die Leitung mindestens einmal von der Rotationsachse entfernt und mindestens einmal zu ihr zurückkehrt.

Im einzelnen gibt es noch eine Vielzahl von Möglichkeiten, das erfindungsgemäße Massendurchflußgerät auszugestalten und weiterzubilden. Dazu wird verwiesen einerseits auf die den Patentanspruch 1 nachgeordneten Patentansprüche, andererseits auf die Beschreibung von Ausführungsbeispielen in Verbindung mit der Zeichnung. In der Zeichnung zeigen
- Fig. 1: sehr schematisch, den grundsätzlichen Aufbau einer ersten Ausführungsform eines erfindungsgemäßen Massendurchflußmeßgeräts;
- Fig. 2: wiederum sehr schematisch, den grundsätzlichen Aufbau einer zweiten Ausführungsform eines erfindungsgemäßen Massendurchflußmeßgeräts;
- Fig. 3: im Schnitt, eine detailliertere Darstellung der im Prinzip in Fig. 1 schematisch dargestellten ersten Ausführungsform eines erfindungsgemäßen Massendurchflußmeßgeräts;
- Fig. 4: einen Schnitt durch den Gegenstand nach Fig. 3 längs der Linie IV - IV;
- Fig. 5: den Rotor des in den Fig. 3 und 4 dargestellten erfindungsgemäßen Massendurchflußmeßgeräts, mit an ihm angreifenden Drehmomenten und Kräften, entsprechend dem Schnitt gemäß Fig. 3;
- Fig. 6: den Rotor des in den Fig. 3 und 4 dargestellten erfindungsgemäßen Massendurchflußmeßgeräts, mit einem an ihm angreifenden Drehmoment und einer an ihm angreifenden Kraft, entsprechend dem Schnitt gemäß Fig. 4 und
- Fig. 7: wiederum schematisch, im Schnitt, den Aufbau einer dritten Ausführungsform eines erfindungsgemäßen Massendurchflußmeßgeräts.

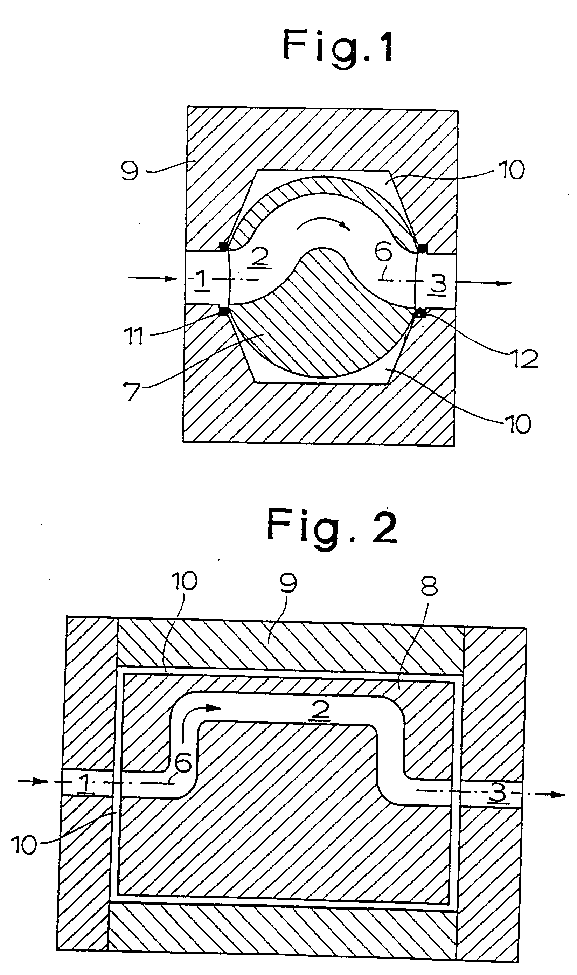

Die in den Fig. 1 bis 4 und 7 dargestellten Massendurchflußmeßgeräts sind für strömende Medien bestimmt und arbeiten nach dem Coriolis-Prinzip. Zu diesen Massendurchflußmeßgeräten gehört ein Leitungseinlauf 1, eine das strömende Medium führende Leitung 2, ein Leitungsauslauf 3, ein die Leitung 2 in eine Rotationsbewegung versetzender Leitungsantrieb 4 und eine Corioliskräfte erfassende Meßeinrichtung 5. Wie die Fig. 1,2,3,5 und 7 zeigen, ist die Leitung 2 jeweils gekrümmt, d.h. die Leitung 2 entfernt sich einmal von der Rotationsachse 6 und kehrt einmal zu ihr zurück.

Für die erfindungsgemäßen Massendurchflußmeßgeräte gilt nun zunächst, daß die Leitung 2 in einem kugelförmigen Rotor 7 (Fig. 1 und 3 bis 7) bzw. in einem kreiszylindrischen Rotor 8 (Fig. 2) ausgeführt ist, der Rotor 7 bzw. 8 sich drehbar in einem als Stator 9 ausgeführten Gehäuse befindet, der Leitungseinlauf 1 und der Leitungsauslauf 3 im Stator 9 verwirklicht sind und mit dem Anfang und dem Ende der Leitung 2 fluchten und der Leitungsantrieb 4 - wie bei einem elektrischen Motor - teilweise im Rotor 7 bzw. 8 und teilweise im Stator 9 verwirklicht ist. Die erfindungsgemäßen Massendurchflußmeßgeräte weisen also eine "Coriolis-Kugel", Rotor 7, bzw. einen Coriolis-Zylinder", Rotor 8 auf. Der als starrer Körper ausgebildete Rotor 7 bzw. 8 ist so geformt, daß die Verteilung der Corioliskräfte eine andere Symmetrie aufweist als die Verteilung der Reibungskräfte. Dieser Umstand gestattet es, die Corioliskräfte unabhängig von den Reibungskräften nachzuweisen.

Bei den erfindungsgemäßen Massendurchflußmeßgeräten kann grundsätzlich der Querschnitt des Spaltes 10 zwischen dem Rotor 7 bzw. 8 und dem Stator 9 gering sein gegenüber dem Querschnitt der Leitung 2, so daß es einer Abdichtung zwischen dem Leitungseinlauf 1 und der Leitung 2 sowie der Leitung 2 und dem Leitungsauslauf 3 nicht bedarf. Es kann jedoch auch, wie dies in Fig. 1 dargestellt ist, der Rotor 7 mit Hilfe von vorzugsweise O-förmig ausgebildeten Dichtringen 11,12 gelagert und gegenüber dem Spalt 10 zwischen dem Rotor 7 und dem Stator 9 abgedichtet sein.

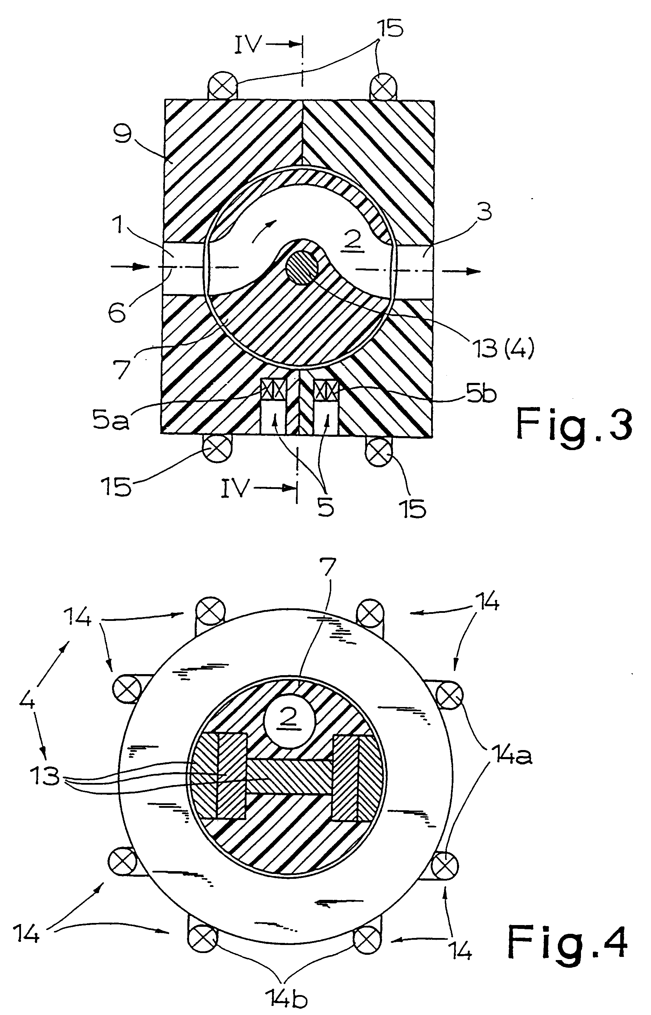

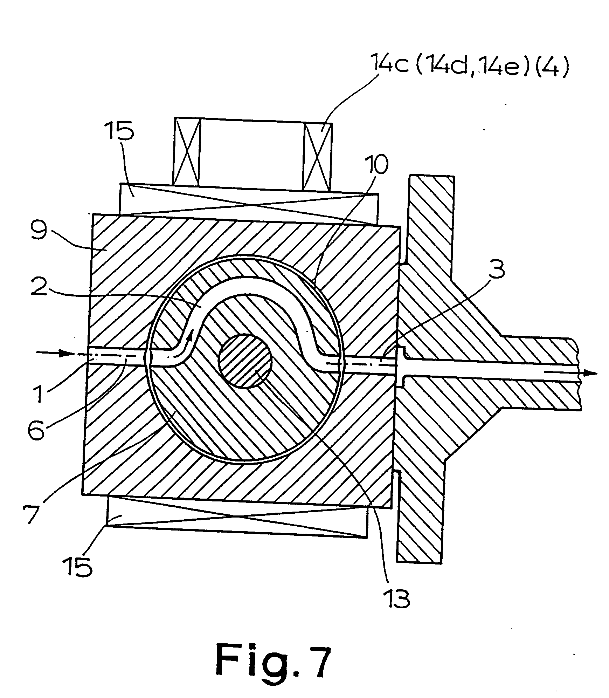

Teil der Erfindung ist, daß der Leitungsantrieb 4, mit dessen Hilfe die Leitung 2, also der Rotor 7 bzw. 8, in eine Rotationsbewegung versetzt wird, wie bei einem elektrischen Motor ausgeführt ist, also teilweise im Rotor 7 bzw. 8 und teilweise im Stator 9 verwirklicht ist. In den Fig. 1 und 2 ist das nicht dargestellt. Die Fig. 3 bis 7 lassen demgegenüber Einzelheiten erkennen. Der Leitungsantrieb 4 besteht nämlich aus einem im Rotor 7 vorgesehenen Dauermagnetsystem 13 und einem am Stator 9 vorgesehenen Drehfeldsystem 14. Dabei liegt die Achse des Dauermagnetsystems 13 senkrecht zur Ebene der Leitung 2 und besteht das Drehfeldsystem 14 aus zwei um 90° gegeneinander versetzt angeordneten Spulenpaaren 14a,14b (Fig. 4) bzw. aus drei um 120° gegeneinander versetzt angeordneten Spulen 14c,14d,14e (Fig. 7, wobei nur die Spule 14c dargestellt ist).

Bei dem erfindungsgemäßen Massendurchflußmeßgerät kann die Corioliskräfte erfassende Meßeinrichtung 5 in verschiedener Weise realisiert sein. Im Ausführungsbeispiel, daß die Fig. 3 und 4 zeigen, besteht die Meßeinrichtung 5 aus zwei Sensorspulen 5a, 5b. Sie sind so angeordnet, daß dann, wenn kein Medium durch die Leitung 2 strömt, also bei einfacher Rotation des Rotors 7, das Dauermagnetsystem 13 in ihnen die gleiche Spannung induziert. Strömt dagegen ein Medium durch die Leitung 2, so resultiert aus den Corioliskräften eine Präzession des kugelförmigen Rotors 7. Dadurch werden in den Sensorspulen 5a und 5b unterschiedliche Spannungen induziert.

Die Fig. 3 und 4 bzw. 7 zeigen Ausführungsformen von erfindungsgemäßen Massendurchflußmeßgeräten, bei denen am Stator 9 Kompensationsspulen 15 vorgesehen sind. Schickt man durch die Kompensationsspulen 15 einen Kompensationsstrom, so können damit die Corioliskräfte kompensiert werden. Der zur Kompensation der Corioliskräfte erforderliche Kompensationsstrom ist dann ein Maß für den Massenstrom des die Leitung 2 durchströmenden Mediums.

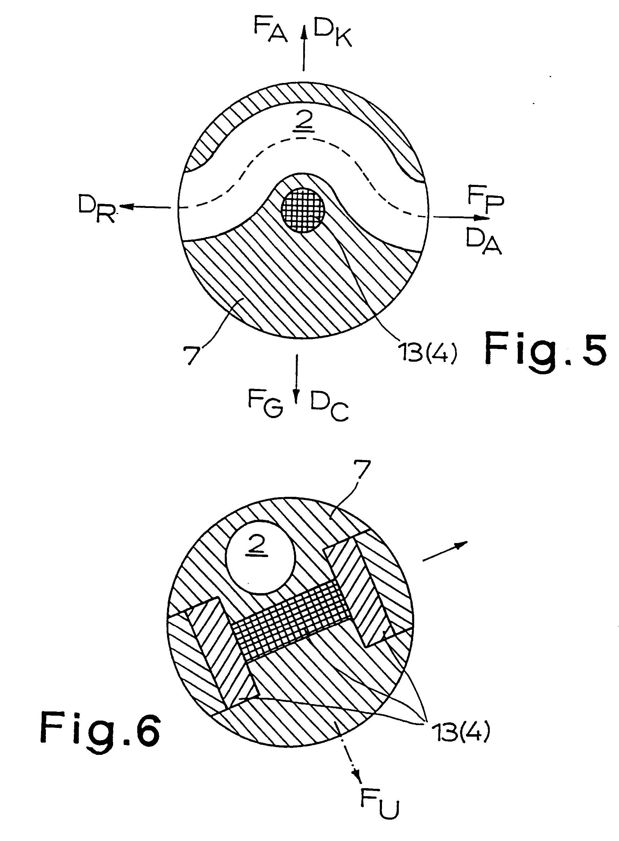

Die Fig. 5 und 6 zeigen den kugelförmigen Rotor 7 des in den Fig. 3 und 4 dargestellten erfindungsgemäßen Massendurchflußmeßgerätes mit angreifenden Drehmomenten und Kräften, nämlich dem Antriebsmoment D_{A}, dem Reibungsmoment D_{R}, dem Coriolismoment D_{C} und dem Kompensationsmoment D_{K}, der Gewichtskraft F_{G}, der Druckdifferenzkraft F_{P}, der Auftriebskraft F_{A} und der Unwuchtkraft F_{U}.

Zusammenfassend ist folgendes festzustellen: Die Erfindung bezieht sich auf ein Massendurchflußmeßgerät für strömende Medien, das nach dem Coriolis-Prinzip arbeitet. Das Meßgerät weist einen Leitungseinlauf 1, eine das strömende Medium führende Leitung 2, einen Leitungsauslauf 3, einen die Leitung in eine Rotationsbewegung versetzenden Leitungsantrieb 4 sowie eine Corioliskräfte erfassende Meßeinrichtung 5 auf.

Die Leitung 2 ist in einem als starrer Körper ausgebildeten Rotor 7 angeordnet, der mit zwei oder drei Rotationsfreiheitsgraden drehbar in einem Stator 9 gelagert und um eine statorfeste Achse 6 antreibbar ist. Dementsprechend bildet der Rotor 7 einen Kreisel, der durch die Corioliskräfte in eine meßtechnisch auswertbare Präzessionsbewegung versetzt wird.

## Patentansprüche

1. Massendurchflußmeßgerät für strömende Medien, das nach dem Coriolisprinzip arbeitet, mit einer das strömende Medium führenden, an einem Stator (9) drehbar gelagerten gekrümmten Leitung (2), mit je einem mit dem Anfang und dem Ende der gekrümmten Leitung (2) kommunizierenden, im Stator (9) verwirklichten Leitungseinlauf (1) und Leitungsauslauf (3), mit einem die gekrümmte Leitung (2) um eine statorfeste Achse (6) in eine Rotationsbewegung versetzenden Leitungsantrieb (4) und mit einer Corioliskräfte erfassenden Meßeinrichtung (5), **gekennzeichnet durch** einen als starrer Körper ausgebildeten, mit zwei oder drei Rotationsfreiheitsgraden drehbar in einem statorfesten Gehäuse (9, 10) gelagerten Rotor (7, 8), der einen die gekrümmte Leitung (2) bildenden Kanal aufweist und berührungsfrei antreibbar ist.

2. Massendurchflußmeßgerät nach Anspruch 1, **dadurch** **gekennzeichnet,** daß der Rotor (7) eine als zumindest partiell kugelförmige Gleitlagerfläche ausgebildete Oberfläche aufweist.

3. Massendurchflußmeßgerät nach Anspruch 1 oder 2, **dadurch gekennzeichnet**, daß der Leitungsantrieb - wie bei einem elektrischen Motor - teilweise im Rotor (7,8) und teilweise im Stator (9) verwirklicht ist.

4. Massendurchflußmeßgerät nach einem der Ansprüche 1 bis 3, **dadurch gekennzeichnet**, daß die Leitung (2) in einem kugelförmigen oder teilzylindrischen Rotor (7,8) ausgeführt ist.

5. Massendurchflußmeßgerät nach einem der Ansprüche 1 bis 4, **dadurch gekennzeichnet,** daß der Leitungseinlauf (1) und der Leitungsauslauf (3) mit dem Anfang und dem Ende der gekrümmten Leitung (2) fluchtend im Stator (9) verwirklicht ist.

6. Massendurchflußmeßgerät nach einem der Ansprüche 1 bis 5, **dadurch gekennzeichnet,** daß der Rotor (7) mit Hilfe von vorzugsweise O-förmig ausgebildeten Dichtringen (11,12) gelagert und gegenüber dem Spalt (10) zwischen dem Rotor (7) und dem Stator (9) abgedichtet ist.

7. Massendurchflußmeßgerät nach einem der Ansprüche 1 bis 6, **dadurch gekennzeichnet**, daß der Leitungsantrieb (4) aus einem im Rotor (7) vorgesehenen Dauermagnetsystem (13) und einem am Stator (9) vorgesehenen Drehfeldsystem (14) besteht.

8. Massendurchflußmeßgerät nach Anspruch 7, **dadurch** **gekennzeichnet**, daß die Achse des Dauermagnetsystems (13) senkrecht zur Ebene der Leitung (2) liegt.

9. Massendurchflußmeßgerät nach Anspruch 7 oder 8, **dadurch gekennzeichnet**, daß das Drehfeld (14) aus zwei um 90° gegeneinander versetzt angeordneten Spulenpaaren (14a,14b) besteht.

10. Massendurchflußmeßgerät nach Anspruch 7 oder 8, **dadurch gekennzeichnet**, daß das Drehfeldsystem (14) aus drei um 120° gegeneinander versetzt angeordneten Spulen (14c,14d,14e) besteht.

11. Massendurchflußmeßgerät nach einem der Ansprüche 1 bis 10, **dadurch gekennzeichnet**, daß die Meßeinrichtung (5) aus zwei Sensorspulen (5a,5b) besteht.

12. Massendurchflußmeßgerät nach einem der Ansprüche 1 bis 12, **dadurch gekennzeichnet**, daß am Stator (9) Kompensationsspulen (15) vorgesehen sind.

## Claims

1. Mass flow meter for flowing media, which works on the basis of the Coriolis effect, with a curved pipe (2) carrying the flowing medium and housed rotatably on a stator (9), with a pipe inlet (1) and pipe outlet (3) communicating with the start and the end respectively of the curved pipe (2) and realised in the stator (9), with a pipe drive (4) displacing the curved pipe (2) in a rotational movement about a fixed stator axis (6) and with a measuring device (5) recording Coriolis forces, characterised by a rotor (7, 8), designed as a rigid body and housed rotatably with two or three degrees of rotational freedom in a fixed stator housing (9, 10), said rotor (7, 8) having a channel forming the curved pipe (2) and being drivable without contact.

2. Mass flow meter according to claim 1, characterised in that the rotor (7) has a surface which is designed as a plain bearing surface which is at least partially spherical.

3. Mass flow meter according to claim 1 or 2, characterised in that the pipe drive - as with an electric motor - is realised partly in the rotor (7, 8) and partly in the stator (9).

4. Mass flow meter according to one of claims 1 to 3, characterised in that the pipe (2) is implemented in a spherical or a pitch cylindrical rotor (7, 8).

5. Mass flow meter according to one of claims 1 to 4, characterised in that the pipe inlet (1) and the pipe outlet (3) are realised in the stator (9), in alignment with the start and the end of the curved pipe (2).

6. Mass flow meter according to one of claims 1 to 5, characterised in that the rotor (7) is housed with the help of preferentially O-shaped sealing rings (11, 12) and is sealed with respect to the gap (10) between the rotor (7) and the stator (9).

7. Mass flow meter according to one of claims 1 to 6, characterised in that the pipe drive (4) consists of a permanent magnet system (13) provided in the rotor (7) and a rotary field system (14) provided on the stator (9).

8. Mass flow meter according to claim 7, characterised in that the axis of the permanent magnet system (13) lies perpendicular to the plane of the pipe (2).

9. Mass flow meter according to claim 7 or 8, characterised in that the rotary field (14) consists of two pairs of coils (14a, 14b) arranged offset by 90° with respect to one another.

10. Mass flow meter according to claim 7 or 8, characterised in that the rotary field system (14) consists of three coils (14c, 14d, 14e) arranged offset by 120° with respect to one another.

11. Mass flow meter according to one of claims 1 to 10, characterised in that the measuring device (5) consists of two sensor coils (5a, 5b).

12. Mass flow meter according to one of claims 1 to 12, characterised in that compensating coils (15) are provided on the stator (9).

## Revendications

1. Débitmètre massique pour des fluides en circulation qui fonctionne d'après le principe de Coriolis et comprend une conduite courbe (2) véhiculant le fluide en circulation et montée de manière tournante sur un stator (9), avec respectivement une entrée de conduite (1) et une sortie de conduite (3) réalisées dans le stator (9) et communiquant avec le début et la fin de la conduite courbe (2), un mécanisme d'entraînement (4) qui imprime à la conduite courbe (2) un mouvement de rotation autour d'un axe (6) solidaire du stator, et un dispositif de mesure (5) qui détecte les forces de Coriolis, **caractérisé en ce** qu'il comprend un rotor (7, 8) réalisé sous la forme d'un corps rigide et monté dans un carter (9, 10) solidaire du stator de manière à pouvoir tourner avec deux ou trois degrés de liberté de rotation, ledit rotor présentant un canal formant la conduite courbe (2) et pouvant être entraîné sans contact.

2. Débitmètre massique selon la revendication 1, caractérisé en ce que le rotor (7) présente une surface conformée en surface de palier lisse au moins partiellement sphérique.

3. Débitmètre massique selon l'une des revendications 1 ou 2, caractérisé en ce que le mécanisme d'entraînement de la conduite est réalisé - comme dans le cas d'un moteur électrique - en partie dans le rotor (7, 8) et en partie dans le stator (9).

4. Débitmètre massique selon l'une des revendications 1 à 3, caractérisé en ce que la conduite (2) est réalisée dans un rotor (7, 8) de forme sphérique ou partiellement cylindrique.

5. Débitmètre massique selon l'une des revendications 1 à 4, caractérisé en ce que l'entrée de conduite (1) et la sortie de conduite (3) sont réalisées dans le stator (9) de manière à être alignées avec le début et la fin de la conduite courbe (2).

6. Débitmètre massique selon l'une des revendications 1 à 5, caractérisé en ce que le rotor (7) est monté à l'aide de joints d'étanchéité (11, 12), de préférence toriques, et rendu étanche par rapport à la fente (10) entre le rotor (7) et le stator (9).

7. Débitmètre massique selon l'une des revendications 1 à 6, caractérisé en ce que le mécanisme d'entraînement de conduite (4) est constitué d'un système d'aimants permanents (13) prévu dans le rotor (7) et d'un système de champ magnétique rotatif (14) prévu dans le stator (9).

8. Débitmètre massique selon la revendication 7, caractérisé en ce que l'axe du système d'aimants permanents (13) est perpendiculaire par rapport au plan de la conduite (2).

9. Débitmètre massique selon l'une des revendications 7 ou 8, caractérisé en ce que le champ magnétique rotatif (14) est formé par deux paires de bobines (14a, 14b) décalées de 90°.

10. Débitmètre massique selon l'une des revendications 7 ou 8, caractérisé en ce que le système de champ magnétique rotatif (14) est formé par trois bobines (14c, 14d, 14e) décalées de 120°.

11. Débitmètre massique selon l'une des revendications 1 à 10, caractérisé en ce que le dispositif de mesure (5) est constitué par deux bobines de détection (5a, 5b).

12. Débitmètre massique selon l'une des revendications 1 à 11, caractérisé en ce que des bobines de compensation (15) sont prévues sur le stator (9).
